# EUROPEAN PATENT SPECIFICATION

(11) **EP 2 984 722 B1**
(45) Date of publication and mention of the grant of the patent: **19.02.2020**
(21) Application number: 13717726.7
(22) Date of filing: 22.03.2013
(51) Int. Cl.: H02J 3/14, H02J 3/32, H02J 3/00, H02J 3/06, B60L 53/14, B60L 55/00, B60L 53/63, B60L 53/65, B60L 53/66, H02J 3/38

(54) **METHOD AND SYSTEM FOR BALANCING LOAD VERSUS POWER GENERATION BETWEEN POWER GRID SEGMENTS**
VERFAHREN UND SYSTEM FÜR LASTAUSGLEICH UND ENERGIEERZEUGUNG ZWISCHEN STROMNETZSEGMENTEN
PROCÉDÉ ET SYSTÈME POUR ÉQUILIBRER UNE CHARGE PAR RAPPORT À UNE GÉNÉRATION DE PUISSANCE ENTRE DES SEGMENTS DE RÉSEAU ÉLECTRIQUE

(43) Date of publication of application: 17.02.2016
(73) Proprietor: NEC Corporation, Tokyo 108-8001 (JP)
(72) Inventor: BODET, Cédric, 81825 München (DE); SCHUELKE, Anett, 69251 Gaiberg (DE); SCHWARZ, Maja, 69115 Heidelberg (DE)
(74) Representative: Patent- und Rechtsanwälte Ullrich & Naumann
(86) International application number: PCT/EP2013/056152
(87) International publication number: WO 2014/146727

(56) References cited:
- EP-A1- 2 518 856
- JP-A- 2011 142 779
- US-A1- 2010 145 540
- US-A1- 2012 249 068
- US-A1- 2012 268 061
- Bundesnetzagentur: "Fahrplananmeldung in Deutschland mit Hilfe des entso-e Scheduling System (ESS)", , 5 February 2014 (2014-02-05), XP055466149, Retrieved from the Internet: URL:https://www.bundesnetzagentur.de/DE/Se rvice-Funktionen/Beschlusskammern/1BK-Gesc haeftszeichen-Datenbank/BK6-GZ/2014/2014_0 001bis0999/2014_001bis099/BK6-14-044/BK6-1 4-044_Fahrplanabwicklung.pdf?__blob=public ationFile&v=1 [retrieved on 2018-04-11]

## Description

The invention relates to a method for balancing load versus power generation between grid segments of a power grid, wherein the grid segments are connected with each other.

The present invention relates further to a system for balancing load versus power generation between grid segments of a power grid, wherein the grid segments are connected with each other.

Although applicable to mobile load sources in general, the present invention will be described with regard to mobile load sources in form of electric vehicles.

Electric vehicles are nowadays seen as to increase so-called "green transportation" in a sustainable way. However, "green transportation" is only "green" in an environmental sense, when renewable resources as well as sustainable charging schemes for the electric vehicles are used.

Charging of electric vehicles is conventionally performed with low power at stationary locations like parking ports at home or at work, at shopping malls or the like, where the charging time and duration are in the range of hours. Therefore, such a charging due to the long charging time can be handled in a flexible manner, since charging time is not a crucial aspect. In contrast there to fast charging, which is considered stochastic, is therefore more challenging due to higher power demands to a supplying power grid and short charging time. Fast charging is considered to be an intermittent load, which can be merely influenced. A conventional link between the charging stations and the power grid has been so far, that the charging stations receive (more or less) the requested power from the power grid. For example in PCT/EP 2012/069789 electric vehicles were assigned to charging stations on the principle of a balancing of a specific location by time profiles and local profiles.

Further in PCT/EP 2012/068880 demand analysis is performed with forecast into power grid management, and travel parameters are used for charging station assignment of electric vehicles.

EP 2 518 856 A1 discloses charging/discharging spots which are connected to a power grid and which charge storage batteries of electric vehicles connected thereto and discharge charged power of the storage batteries to the power grid; a data center which collects and stores current position information of electric vehicles located in a territory and charging state information of storage batteries of the electric vehicles; and a power aggregator which ranks degrees of necessity of charging/discharging the storage batteries of the respective electric vehicles based on the stored position information, the charging state information of the storage batteries and position information of the charging/discharging spots and creates a ranking list indicating the ranks. The power aggregator distributes information for guiding each of the electric vehicles to a designated one of the charging/discharging spots for charging or discharging in accordance with the ranking list Accordingly, moving electric vehicles can be guided to charging/discharging spots, so that power charged/discharged on the power grid side can be kept more surely.

These and other conventional methods and systems suffer the following problems: One of the problems is, that they are only suitable for a very few number of stationary power generation sources with more or less stable power generation. A further problem is, that critical load levels cannot be prevented in any case, for example when a huge number of electric vehicles attaches for charging at charging stations in one grid segment.

It is therefore an objective of the present invention to provide a method and a system enabling prevention respectively at least a reduction of the possibility of critical load levels.

It is a further objective of the present invention to provide a method and a system enhancing exploitation of local power generation versus local power demands respectively loads.

It is an even further objective of the present invention to provide a method and a system being more flexible in terms of assigning electric vehicles to charging stations.

It is an even further objective of the present invention to provide a more effective utilization of profile tolerances or variations in the generation profiles and load profiles.

According to the invention the objectives are accomplished by a method of claim 1 and a system of claim 12.

According to the invention it has been recognized that a better utilization of tolerance parameters in local generation and controllable loads is enabled, thus enabling higher Renewable Energy Sources utilization in their local characteristics.

According to the invention it has further been recognized that critical load levels in power grid segments could be significantly reduced if not prevented.

According to the invention it has further been recognized that higher load and generation levels are enabled.

According to the invention it has further been recognized that local generation versus local demands is efficiently exploited leading to greater power grid stability.

Further features, advantages and preferred embodiments are described in the following subclaims.

According to a preferred embodiment, moving profiles of the mobile load sources are adapted and/or each of the mobile load sources is assigned to one of the power grid segments according to a control scheme determined for controlling the power grid segments. By adapting moving profiles of the mobile load sources to adapt the load profiles and/or the generation profiles according to a determined control scheme, the mobile load profiles can be fast and easily amended. For example, when a mobile electric vehicle representing a mobile load source is travelling from A to B then its moving profile along certain waypoints and/or charging stations can be adapted in such a way, that electric vehicle is assigned to a first charging station between A and B. This first charging station is connected to a power grid segment A'. The electric vehicle is redirected to another charging station nearby, which is however connected to a different power grid segment, when for example the load level in grid segment A' is already high. Therefore, load can be shifted from the power grid segment to which the first charging station is connected, to the other power grid segment. Therefore load on the first power grid segment is reduced and charging station connected to another the load on the other power grid segment is increased.

According to a further preferred embodiment one or more load profiles and/or one or more generation profiles for at least one future time point are predicted for balancing. This enhances the balancing even more, since future time load profiles and/or generation profiles at future time points are considered when balancing actual load profiles and/or generation profiles between the power grid segments. For example an increased load in the future in a certain power grid segment could be balanced out by increasing the power generation for this power grid segment at a time between the actual time and the future time point, so that the power generation meets the load at the future time point, since power generation may take some time until the increased power is available.

According to a further preferred embodiment a critical load level for at least one grid segment is determined and the load for the at least one grid segment is balanced to be below the critical load level. By for example determining critical load levels for different grid segments, preferably by including also a corresponding load level margin, balancing between power grid segments can be performed more efficiently, since different power grid segments have different characteristics, which are then taken into account.

According to a further preferred embodiment, mobile generation sources are included. This enables for example not only to see electric vehicles as mobile load sources but also as mobile generation sources. For example, energy recuperation of the electric vehicles may be taken into account. Another option is to use the internal batteries of the electric vehicles as intermittent generation sources for the power grid segment or for the charging station, when connected to a charging station.

According to a further preferred embodiment the variations of the generation profiles and/or load profiles include fluctuations and/or controlling ranges of the profiles, and the method steps are performed based on the determined variations. By including variations in the balancing, an enhanced stability of the respective power grid segments and reliability and energy efficiency for the whole power grid comprising of different power grid segments is achieved.

According to a further preferred embodiment a predicted control scheme is determined and additionally used for balancing based on the predicted one ore more load profiles and/or one or more generation profiles. By determining a predicted control scheme a fast and reliable balancing is ensured, since when the predicted control scheme becomes the actual control scheme, no further adaption respectively only very few and minor adaptions have to be included into the predicted control scheme to cope with actual power grid conditions. Therefore, further and time consuming calculations and determinations are avoided and thus, an even more efficient balancing is provided.

According to a further preferred embodiment the moving profiles of the mobile load sources are adapted by announcing guidance information to the mobile load sources and/or existing guiding information is included for analyzing. This enables for example assigning of a mobile source to different power grid segments: An electric vehicle is redirected from a charging station connected to a first power grid segment to another charging station connected to a second power grid segment. Therefore the load for charging the electric vehicle from one power grid segment to another is shifted. The term guidance information is to be understood here, that a mobile load source is assigned to follow a moving profile according to the guidance information. When guiding information is included into the analyzing, then the analyzing can be performed more precisely since further information about the moving profile of the mobile load source can be included.

According to a further preferred embodiment external profile influencing information is determined and used in the method steps for balancing, preferably for determining the predicted control scheme. The term "external profile influencing information" is to be understood as any information, which has an impact or influences, i.e. requires an amendment of the moving profile due to this information. For example changing weather conditions may have an effect on the generation profiles of generation sources: For example if the wind changes then wind power and the corresponding generated energy of the wind power also changes. The same applies respectively for solar energy: When the weather gets clouded, then solar cells cannot produce as much electric energy as before. Therefore generation of electric power decreases. In summary by including external profile influencing information balancing can be performed even more efficiently.

According to a further preferred embodiment a moving range and/or capacity is assigned to the mobile load sources. This enables a realistic simulation of electric vehicles as mobile load sources.

According to a further preferred embodiment balancing is performed such that the difference between all loads of load sources and all generation of all generation sources is minimized. This enables in a simple way a balancing: since a minimized amount of generated energy is wasted respectively, most of the required load can be provided.

According to a further preferred embodiment balancing is performed between grid segments on a same structure grid level. This ensures an effective balancing since power grid segments, having in general the same nature characteristics, for example a comparable regional sphere of power supply, maximum generation and/or load levels in general or the like, can be easier balanced respectively need only few amendments in their profiles for balancing.

According to a further preferred embodiment balancing is performed between grid segments on different structural power grid levels. This enables a more complete balancing not only between power grid segments of the same structural power grid level but also to power grid segments of another structural grid level so that the overall power grid can be balanced out more efficiently.

According to a further preferred embodiment, the method includes communicating by a wireless connection with the mobile load sources, preferably based on SMS or instant messaging. By using short message services SMS or instant messaging IM there is no need to use proprietary protocols when transferring or exchanging information between the mobile load sources and the power grid segments for balancing.

There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will be explained. In the drawings
- Fig. 1: shows in a schematical view a method according to a first embodiment of the present invention; and
- Fig. 2: shows steps of a method according to a second embodiment of the present invention.

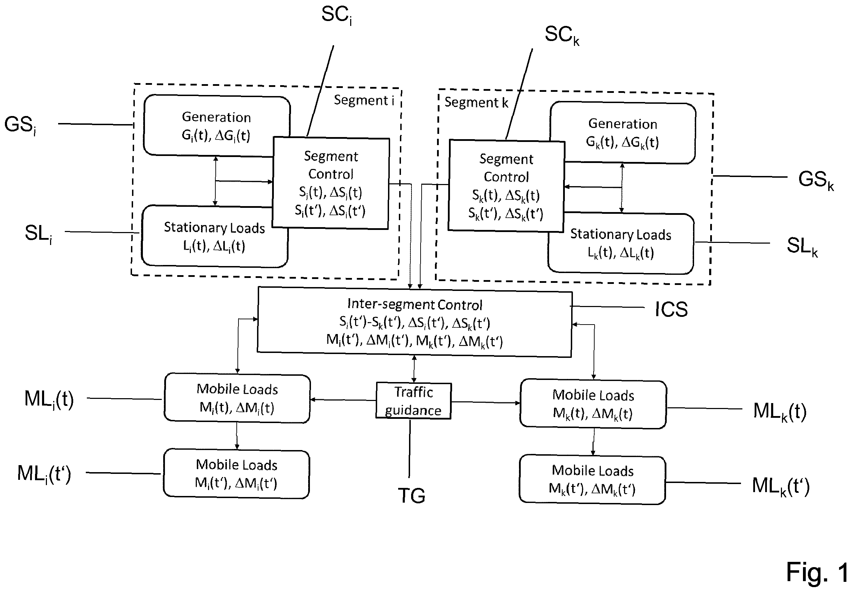

Fig. 1 shows in a schematical view a method according to a first embodiment of the present invention.

In Fig. 1 two power grid segments GSᵢ, GSₖ are each comprising generation sources with generation profiles Gᵢ(t), Gₖ(t) and with corresponding variations ΔGᵢ(t), ΔGₖ(t) which represent the generation sources associated respectively located in the corresponding power grid segment GSᵢ, GSₖ. Each power grid segment GSᵢ, GSₖ comprises also stationary loads SLᵢ, SLₖ having corresponding load profiles Lᵢ(t), Lₖ(t) and corresponding variations ΔLᵢ(t), ΔLₖ(t). Further each power grid segment GSᵢ, GSₖ comprises a segment control SCᵢ, SCₖ which is connected to an inter-segment control ICS. Each power grid segment control SCᵢ, SCₖ calculates adjustment needs Sᵢ(t), Sₖ(t) and corresponding variations ΔSᵢ(t), ΔSₖ(t) at the current time point t and future time point t=t' and sends its calculations to the inter-segment control ICS.

The inter-segment control ICS is further connected to mobile load sources MLᵢ(t), MLₖ(t) represented by their corresponding mobile loads Mᵢ(t), Mₖ(t) at the current time point t and uses also forecasted mobile loads Mᵢ(t'), Mₖ(t') at a future time point t'. A traffic guidance TG guides the mobile loads sources MLᵢ, MLₖ by sending corresponding instructing information to amend their corresponding moving profiles. The inter-segment control ICS calculates the difference between the adjustment needs Sᵢ and Sₖ at the future time point t', the corresponding variations ΔSᵢ(t'), ΔSₖ(t') as well as uses the mobile loads Mᵢ, Mₖ at the future time point t' together with their corresponding variations ΔMᵢ(t'), ΔMₖ(t') for determing a control scheme to be used for balancing the power grid segments GSᵢ, GSₖ.

The power grid segments GSᵢ, GSₖ are described - as mentioned above - by their generation profile comprising an energy generation Gᵢ(t), Gₖ(t) and the variation of the profile ΔGᵢ(t), ΔGₖ(t) which is given by the fluctuation of Gᵢ(t), Gₖ(t) as well as the controllable range, for example reduction of increase of generation capacities. The load profile is defined by the sum of all stationary loads SLᵢ, SLₖ, meaning that the loads are fix mounted and not movable but stochastically in usage and partially controllable. The load profiles are denoted with Lᵢ(t), Lₖ(t) and the possible variation of the corresponding profile load with ΔLᵢ(t), ΔLₖ(t) which is given by its natural stochastic as well as controllability, for example Demand Side Management programs. Each power grid segment GSᵢ, GSₖ is balancing its load and generation profile calculating the adjustment needs Sᵢ(t), Sₖ(t), as well as its given tolerance range ΔSᵢ(t), ΔSₖ(t) for the time point t. Based on the individual generation profiles a reactive control scheme as well as a predictive control scheme can be calculated for the actual time t and a future time t'. The inter-segment control ICS analyzes the difference between adjacent manageable power grid segments GSᵢ, GSₖ and applies a cooperative balancing on the static load and generation profiles. The inter-segment control ICS then accesses the dynamics of the mobile loads MLᵢ, MLₖ at the time point t and their variance ΔMᵢ(t), ΔMₖ(t) for the grid segments GSᵢ and GSₖ.

For interaction with the traffic guidance TG, a prediction of the mobile load profiles Mᵢ, Mₖ for the time t' is calculated respectively determined. This calculation includes also possible variations in the travel behavior of the mobile load sources MLₖ, MLᵢ, exploiting tolerances in directions and/or moving patterns.

The inter-segment control ICS evaluates then the mobile load profile options for the time t and t' and initiates a needed charging assignment by triggering a cooperated charging profile shift according to the power balancing needs of the grid segments GSᵢ, GSₖ and their interaction flexibilities. When the mobile load sources MLᵢ, MLₖ are considered to be electric vehicles, then as a result electric vehicles are assigned to or are recommended their charging spots according to the power grid demands of the travelled area, respecting however constraints of their travel flexibility.

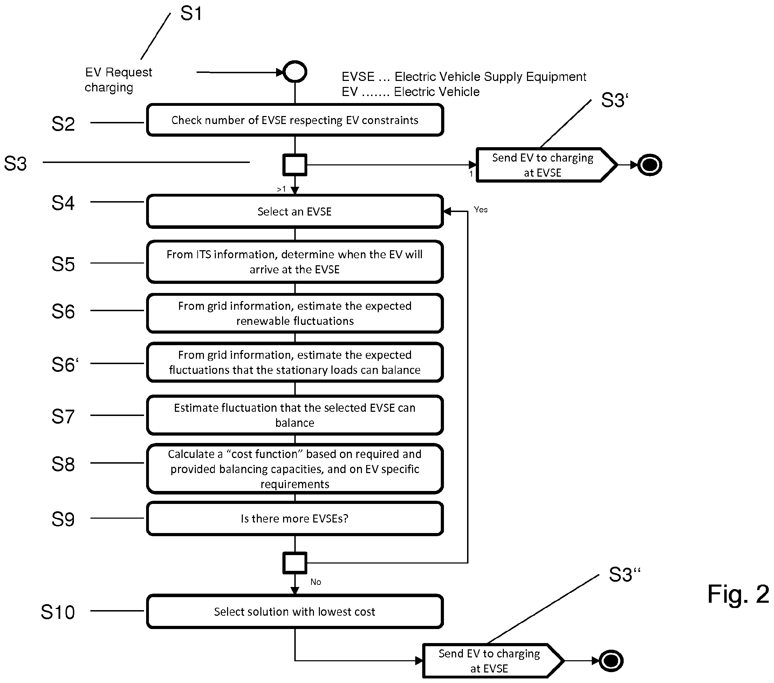

Fig. 2 shows steps of a method according to a second embodiment of the present invention.

In Fig. 2 a further embodiment according to the invention is shown. This embodiment according to Fig. 2 is based on a scenario where fluctuations of the power grid due to renewable energy sources are balanced out and where electric vehicles are requested for charging a short time before actually starting to charge at a charging station. As an alternative, for example a day-ahead-scheduling of a fleet of vehicles may be implemented.

When in a first step S1 an electric vehicle EV requests charging and in a second step S2 a trip routing, for example known through navigation and/or ITS information, then a list of electric vehicle charging equipment EVSE expecting charging constraints of the electric vehicle EV is provided. Those constraints may include whether the charging station EVSE is within the range of the electric vehicle EV, i.e. the required energy to reach to electric vehicle supply equipment EVSE is sufficient or if the distance of the electric vehicle supply equipment EVSE to the current route of the electric vehicle EV is below a predetermined distance, etc.

In a third step S3 it is checked whether only one electric vehicle supply equipment EVSE is available. If yes then in a further step S3' the electric vehicle EV is sent to be charged at this only one electric vehicle supply equipment EVSE. If there are more than one electric vehicle supply equipment EVSE, then in a fourth step S4 an electric vehicle supply equipment EVSE is selected. In a fifth step S5 it is determined when the electric vehicle EV will arrive at the electric vehicle supply equipment EVSE, for example by using ITS information. This may for example be performed by calculating the expected time of arrival at the electric vehicle supply equipment EVSE in the considered power grid segment by using routing information. In addition the required energy for charging can be calculated based on the electric vehicle energy profile. It is possible to include one ore more routes to reach the electric vehicle supply equipment EVSE.

In a sixth step S6 power grid segment information is used to estimate the expected renewable fluctuations. This means, that from the power grid segment information the expected energy balancing needs of this power grid segment, for example driven by renewable fluctuations or load shifting needs during the timeframe of charging are calculated for the grid segment in which the electric vehicle supply equipment EVSE is located. By using historical data and/or weather information, such as scattered clouds, changing winds or the like, the expected renewable fluctuations can be calculated more precisely. Balancing needs may be optionally be reduced by other controllable loads and/or control mechanisms in the corresponding power grid segments.

In a seventh step S7 fluctuations are estimated that the selected electric vehicle supply equipment EVSE can balance. The balancing capacity of the charging electric vehicle EV at a possible electric vehicle supply equipment EVSE is calculated. For example, it may be assumed that for balancing 50% of the power of the electric vehicle supply equipment EVSE can be controlled for the purpose of fluctuation balancing, i.e. a certain low power limit is guaranteed and the power range up to the maximum power rate of this electric vehicle supply equipment EVSE and for this electric vehicle EV is adjusted in a flexible way.

In an eighth step S8 a "cost" function is calculated based on the required and provided balancing capacities and on electric vehicle specific requirements. This "cost" function is therefore calculated based on the fluctuation balancing means of the power grid segment and on the fluctuation balancing capacities of the electric vehicle supply equipment EVSE. The "cost" function may also take into account electric vehicle specific requirements such as the time and energy required to reach the electric vehicle supply equipment EVSE, the convenience of the location of the electric vehicle supply equipment EVSE with respect to neighboring facilities or the detour it represents from the current route. The term "cost" is to be understood in a general sense and is not only related to monetary cost. The term "cost" may for example be understood in terms of travel time, charging time, etc.

In a ninth step S9 it is checked whether there are more electric vehicle supply equipment EVSE. If yes, then steps S4 - S9 are repeated. If there are no more electric vehicle supply equipment EVSE then in a tenth step S10 the electric vehicle supply equipment EVSE associated with the lowest cost is selected and in a further step S3" the electric vehicle is sent to charging at the electric vehicle supply equipment EVSE. This means that the electric vehicle supply equipment EVSE providing the lowest cost function is selected and the electric vehicle EV is assigned to the corresponding electric vehicle supply equipment EVSE, for example in the adjacent power grid segment. This might cause an assignment to an electric vehicle supply equipment EVSE in the neighboring power grid segment resulting in a slight route change if needed. For example in a city this might result in guidance to a city district with a stronger power grid support at the charging time.

In summary the present invention provides cooperative balancing between different power grid segments governed by their local grid segment controls individually aiming for the exploitation of local generation versus local demands. The present invention enables mobile loads to be used to impact the controllable space of the power grid segment load profile against the controllable space of the generation profile: For example travel tolerances like speed, direction or charging needs included in the moving profile are exploited to influence for example charging assignments of electric vehicles towards local power grid control parameters.

The present invention utilizes the mobility of short-term mobile sources like electric vehicle charging needs in the load profile adaption for power grid segment through exchange of for example electric vehicle charging demands between grid segments. The present invention further utilizes instantaneous as well as predicted charging needs and of a transport intelligence by guiding electric vehicles to charging spots for filling local power grid balancing demands.

The present invention enables power-demand driven charging assignment for stochastic mobile loads with charging demand characteristics like power, energy, charging time and waiting times. The present invention enables use of the mobility of short term electric vehicle charging needs by interaction with a transport service intelligence for estimation and prediction of electric vehicle charging demands as function of power, energy and time. The present invention enables a load forecast with means of prevention of critical load levels to impact the grid balancing and enables mobile load profile negotiations between power grid segments within travel constraints.

Even further the present invention provides a control method for power grid segment balancing comprising an electric vehicle charging assignment method utilizing the mobility range of electric vehicles as flexible mobile load profiles and combines load forecast and means of prevention of critical load levels to impact the power grid balancing. The present invention impacts dynamically in a reactive and predictive manner power grid segment load profiles as cooperative inter-grid load exchange and enables a better utilization of tolerance parameters in local generation and controllable loads enabling a higher Renewable Energy Sources utilization in their local characteristics. The present invention accommodates higher load and generation levels with the utilization of mobile loads charging location flexibility cooperatively between all mobile loads and power grid segments. In particular the present invention enables a reduction of investment costs for charging infrastructure and city grid and a reduction of operational costs for additional balancing resources. The present invention further enables load forecast and prevention of critical load levels to relax balancing needs on grid segments.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for balancing load versus power generation between power grid segments (GSᵢ, GSₖ) of a power grid, wherein the grid segments (GSᵢ, GSₖ) are connected with each other, wherein each one of the grid segments (GSᵢ, GSₖ) comprises generation sources with generation profiles (Gᵢ, Gₖ) and with corresponding variations (Δ Gᵢ, Δ Gₖ), stationary loads (SLᵢ, SLₖ) having corresponding load profiles (Lᵢ, Lₖ) and corresponding variations (ΔLᵢ, ΔLₖ), and a segment control (SCᵢ, SCₖ) which is connected to an inter-segment control (ICS), and wherein at least one of the grid segments (GSᵢ, GSₖ) is connectable to a mobile load source (MLᵢ, MLₖ) represented by a mobile load profile (Mᵢ, Mₖ) and moving according to a moving profile, the method comprising the following steps:
a) Each power grid segment control (SCᵢ, SCₖ) calculates adjustment needs (Sᵢ, Sₖ) and corresponding variations (ΔSᵢ, ΔSₖ) at a future time point (t') and sends its calculations to the inter-segment control (ICS),
b) The inter-segment control (ICS) calculates the difference between the adjustment needs (Sᵢ, Sₖ) at the future time point (t') and the corresponding variations (ΔSᵢ, ΔSₖ),
c) The inter-segment control (ICS) uses forecasted mobile loads (Mᵢ, Mₖ) at the future time point (t') together with their corresponding variations (ΔMᵢ, Δ Mₖ), and
d) The inter-segment control (ICS) determines a control scheme to be used for balancing the power grid segments (GSᵢ, GSₖ) based on the difference between the adjustment needs (Sᵢ, Sₖ) at the future time (t'), the corresponding variations (ΔSᵢ, ΔSₖ), the forecasted mobile loads (Mᵢ, Mₖ) at the future time point (t') and the corresponding variations (ΔMᵢ, ΔMₖ),

2. The method according to claim 1, wherein the moving profiles of the mobile load sources (MLᵢ, MLₖ) are amended.

3. The method according to one of the claims 1-2, wherein a critical load level for at least one grid segment (GSᵢ, GSₖ) is determined and the load for the at least one grid segment (GSᵢ, GSₖ) is balanced to be below the critical load level.

4. The method according to one of the claims 1-3, wherein mobile generation sources are included.

5. The method according to one of the claims 2-4, wherein the moving profiles of the mobile load sources (MLᵢ, MLₖ) are amended by announcing guidance information (TG) to the mobile load sources (MLᵢ, MLₖ).

6. The method according to one of the claims 1-5, wherein for balancing, preferably for determining the control scheme, external profile influencing information is determined and used.

7. The method according to one of the claims 1-6, wherein a moving range and/or capacity is assigned to the mobile load sources (MLᵢ, MLₖ).

8. The method according to one of the claims 1-7, wherein balancing is performed such that the difference between all loads of load sources and all generation (Gᵢ, Gₖ) of all generation sources is minimized

9. The method according to one of the claims 1-8, wherein balancing is performed between grid segments (GSₖ, GSᵢ) on a same structural power grid level.

10. The method according to one of the claims 1-9, wherein balancing is performed between grid segments (GSᵢ, GSₖ) on different structural power grid levels.

11. The method according to one of the claims 1-10, wherein communicating by a wireless connection with the mobile load sources, preferably based on SMS or instant messaging, is included.

12. A system for balancing load versus power generation between power grid segments (GSᵢ, GSₖ) of a power grid, wherein the grid segments (GSᵢ, GSₖ) are connected with each other, wherein each one of the grid segments (GSᵢ, GSₖ) comprises generation sources with generation profiles (Gᵢ, Gₖ) and with corresponding variations (ΔGᵢ, ΔGₖ), stationary loads (SLᵢ, SLₖ), and a segment control (SCᵢ, SCₖ) which is connected to an inter-segment control (ICS), and wherein at least one of the grid segments (GSᵢ, GSₖ) is connectable to a mobile load source (MLᵢ, MLₖ) represented by a mobile load profile (Mᵢ, Mₖ) and moving according to a moving profile, wherein:
a) Each power grid segment control (SCᵢ, SCₖ) is configured to calculate adjustment needs (Sᵢ, S_{K}) and corresponding variations (ΔSᵢ, ΔSₖ) at a future time point (t') and to send its calculations to the inter-segment control (ICS),
b) The inter-segment control (ICS) is configured to calculate adjustment needs (Sᵢ, Sₖ) at the future time point (t') and the corresponding variations (ΔSᵢ, ΔSₖ),
c) The inter-segment control (ICS) is configured to use forecasted mobile loads (Mᵢ, Mₖ) at the future time point (t') together with their corresponding variations (ΔMᵢ, ΔMₖ), and
d) The inter-segment control (ICS) is configured to determine a control scheme to be used for balancing the power grid segments (GSᵢ, GSₖ) based on the difference between the adjustment needs (Sᵢ, Sₖ) at the future time (t'), the corresponding variations (ΔSᵢ, ΔSₖ), the forecasted mobile loads (Mᵢ, Mₖ) at the future time point (t') and the corresponding variations (ΔMᵢ, ΔMₖ).

## Patentansprüche

1. Ein Verfahren zum Ausgleichen von Last gegenüber Energieerzeugung zwischen Energienetzsegmenten (GSᵢ, GSₖ) eines Energienetzes, wobei die Netzsegmente (GSᵢ, GSₖ) miteinander verbunden sind, wobei jedes der Netzsegmente (GSᵢ, GSₖ) Erzeugungsquellen mit Erzeugungsprofilen (Gᵢ, Gₖ) und mit entsprechenden Schwankungen (ΔGᵢ, ΔGₖ), stationäre Lasten (SLᵢ, SLₖ) mit entsprechenden Lastprofilen (Lᵢ, Lₖ) und entsprechenden Schwankungen (ΔLᵢ, ΔLₖ) und eine Segmentkontrolle (SCᵢ, SCₖ), die mit einer Inter-Segment-Kontrolle (ICS) verbunden ist, umfasst und
wobei zumindest eines der Netzsegmente (GSᵢ, GSₖ) mit einer mobilen Lastquelle (MLᵢ, MLₖ) verbindbar ist, welche durch ein mobiles Lastprofil (Mᵢ, Mₖ) repräsentiert ist, und sich gemäß einem Bewegungsprofil bewegt, wobei das Verfahren die folgenden Schritte umfasst:
a) Jede Energienetzsegmentkontrolle (SCᵢ, SCₖ) berechnet den Anpassungsbedarf (Sᵢ, Sₖ) und entsprechende Schwankungen (ΔSᵢ, ΔSₖ) zu einem zukünftigen Zeitpunkt (t') und sendet ihre Berechnungen zu der Inter-Segment-Kontrolle (ICS),
b) Die Inter-Segment-Kontrolle (ICS) berechnet den Unterschied zwischen dem Anpassungsbedarf (Sᵢ, Sₖ) zu dem zukünftigen Zeitpunkt (t') und die entsprechenden Schwankungen (ΔSᵢ, ΔSₖ),
c) Die Inter-Segment-Kontrolle (ICS) benutzt vorhergesagte mobile Lasten (Mᵢ, Mₖ) zu dem zukünftigen Zeitpunkt (t') zusammen mit ihren entsprechenden Schwankungen (ΔMᵢ, ΔMₖ) und
d) Die Inter-Segment-Kontrolle (ICS) ermittelt ein Steuerungsschema, welches zum Ausgleichen der Energienetzsegmente (GSᵢ, GSₖ) benutzt wird, basierend auf der Differenz zwischen dem Anpassungsbedarf (Sᵢ, Sₖ) zu dem zukünftigen Zeitpunkt (t'), den entsprechenden Schwankungen (ΔSᵢ, ΔSₖ), den vorhergesagten mobilen Lasten (Mᵢ, Mₖ) zu dem zukünftigen Zeitpunkt (t') und den entsprechenden Schwankungen (ΔMᵢ, ΔMₖ).

2. Verfahren gemäß Anspruch 1, wobei die Bewegungsprofile der mobilen Lastquellen (MLᵢ, MLₖ) geändert werden.

3. Verfahren gemäß einem der Ansprüche 1-2, wobei ein kritisches Lastniveau für zumindest ein Netzsegment (GSᵢ, GSₖ) ermittelt wird und die Last für das zumindest eine Netzsegment (GSᵢ, GSₖ) derart ausgeglichen wird, dass es unter dem kritischen Lastniveau liegt.

4. Verfahren gemäß einem der Ansprüche 1-3, wobei mobile Erzeugungsquellen einbezogen werden.

5. Verfahren gemäß einem der Ansprüche 2-4, wobei die Bewegungsprofile der mobilen Lastquellen (MLᵢ, MLₖ) angepasst werden durch Bereitstellung von Leitinformationen (TG) für die mobilen Lastquellen (MLᵢ, MLₖ).

6. Verfahren gemäß einem der Ansprüche 1-5, wobei zum Ausgleichen, vorzugsweise zum Ermitteln des Steuerungsschemas, externe Profilbeeinflussungsinformationen ermittelt und benutzt werden.

7. Verfahren gemäß einem der Ansprüche 1-6, wobei eine Bewegungsreichweite und/oder eine Kapazität den mobilen Lastquellen (MLᵢ, MLₖ) zugeordnet wird.

8. Verfahren gemäß einem der Ansprüche 1-7, wobei das Ausgleichen derart durchgeführt wird, sodass die Differenz zwischen allen Lasten der Lastquellen und aller Erzeugung (Gᵢ, Gₖ) aller Erzeugungsquellen minimiert wird.

9. Verfahren gemäß einem der Ansprüche 1-8, wobei das Ausgleichen zwischen Netzsegmenten (GSᵢ, GSₖ) auf dem gleichen strukturellen Energienetzniveau durchgeführt wird.

10. Verfahren gemäß einem der Ansprüche 1-9, wobei das Ausgleichen zwischen Netzsegmenten (GSᵢ, GSₖ) auf unterschiedlichen strukturellen Energienetzniveaus durchgeführt wird.

11. Verfahren gemäß einem der Ansprüche 1-10, wobei das Kommunizieren mittels einer Drahtlosverbindung mit mobilen Lastquellen, vorzugsweise basierend auf SMS oder auf Sofortnachrichten, einbezogen wird.

12. System zum Ausgleichen von Last gegenüber Energieerzeugung zwischen Energienetzsegmenten (GSᵢ, GSₖ) eines Energienetzes, wobei die Netzsegmente (GSᵢ, GSₖ) miteinander verbunden sind, wobei jedes der Netzsegmente (GSᵢ, GSₖ) Erzeugungsquellen beinhaltet mit Erzeugungsprofilen (Gᵢ, Gₖ) und mit entsprechenden Schwankungen (ΔGᵢ, ΔGₖ), stationäre Lasten (SLᵢ, SLₖ) und eine Segmentkontrolle (SCᵢ, SCₖ), die mit einer Inter-Segment-Kontrolle (ICS) verbunden ist, umfasst und wobei zumindest eines der Netzsegmente (GSᵢ, GSₖ) mit einer mobilen Lastquelle (MLᵢ, MLₖ) verbindbar ist, welche durch ein mobiles Lastprofil (Mᵢ, Mₖ) repräsentiert ist, und sich gemäß einem Bewegungsprofil bewegt, wobei:
a) Jede Energienetzsegmentkontrolle (SCᵢ, SCₖ) ausgebildet ist, den Anpassungsbedarf (Sᵢ, Sₖ) und entsprechende Schwankungen (ΔSᵢ, ΔSₖ) zu einem zukünftigen Zeitpunkt (t') zu berechnen und ihre Berechnungen zu der Inter-Segment-Kontrolle (ICS) zu senden,
b) Die Inter-Segment-Kontrolle (ICS) ist ausgebildet, um den Unterschied zwischen dem Anpassungsbedarf (Sᵢ, Sₖ) zu dem zukünftigen Zeitpunkt (t') und die entsprechenden Schwankungen (ΔSᵢ, ΔSₖ) zu berechnen,
c) Die Inter-Segment-Kontrolle (ICS) ist ausgebildet, vorhergesagte mobile Lasten (Mᵢ, Mₖ) zu dem zukünftigen Zeitpunkt (t') zusammen mit ihren entsprechenden Schwankungen (ΔMᵢ, ΔMₖ) zu benutzen und
d) Die Inter-Segment-Kontrolle (ICS) ist ausgebildet, ein Steuerungsschema zu ermitteln, welches zum Ausgleichen der Energienetzsegmente (GSᵢ, GSₖ) benutzt wird, basierend auf der Differenz zwischen dem Anpassungsbedarf (Sᵢ, Sₖ) zu dem zukünftigen Zeitpunkt (t'), den entsprechenden Schwankungen (ΔSᵢ, ΔSₖ), den vorhergesagten mobilen Lasten (Mᵢ, Mₖ) zu dem zukünftigen Zeitpunkt (t') und den entsprechenden Schwankungen (ΔMᵢ, ΔMₖ).

## Revendications

1. Procédé pour équilibrer une charge par rapport à une génération de puissance entre des segments de réseau électrique (GSᵢ, GSₖ) d'un réseau électrique, dans lequel les segments de réseau (GSᵢ, GSₖ) sont connectés les uns aux autres, dans lequel chacun des segments de réseau (GSᵢ, GSₖ) comprend des sources de génération avec des profils de génération (Gᵢ, Gₖ) et avec des variations correspondantes (ΔGᵢ, ΔGₖ), des charges fixes (SLᵢ, SLₖ) ayant des profils de charges correspondants (Lᵢ, Lₖ) et des variations correspondantes (ΔLᵢ, ΔLₖ), et une commande de segment (SCᵢ, SCₖ) qui est connectée à une commande inter-segments (ICS), et
dans lequel au moins l'un des segments de réseau (GSᵢ, GSₖ) peut être connecté à une source de charge mobile (MLᵢ, MLₖ) représentée par un profil de charge mobile (Mᵢ, Mₖ) et se déplaçant selon un profil de déplacement, le procédé comprenant les étapes suivantes :
a) chaque commande de segment de réseau électrique (SCᵢ, SCₖ) calcule des besoins d'ajustement (Sᵢ, Sₖ) et des variations correspondantes (ΔSᵢ, ΔSₖ) à un moment futur (t') et envoie ses calculs à la commande inter-segments (ICS),
b) la commande inter-segments (ICS) calcule la différence entre les besoins d'ajustement (Sᵢ, Sₖ) au moment futur (t') et les variations correspondantes (ΔSᵢ, ΔSₖ),
c) la commande inter-segments (ICS) utilise des charges mobiles prévues (Mᵢ, Mₖ) au moment futur (t') ainsi que leurs variations correspondantes (ΔMᵢ, ΔMₖ), et
d) la commande inter-segments (ICS) détermine un schéma de commande à utiliser pour équilibrer les segments de réseau électrique (GSi, Gsk) sur la base de la différence entre les besoins d'ajustement (Sᵢ, Sₖ) au moment futur (t'), les variations correspondantes (ΔSᵢ, ΔSₖ), les charges mobiles prévues (Mᵢ, Mₖ) au moment futur (t') et les variations correspondantes (ΔMᵢ, ΔMₖ).

2. Procédé selon la revendication 1, dans lequel les profils de déplacement des sources de charges mobiles (MLᵢ, MLₖ) sont modifiés.

3. Procédé selon l'une quelconque des revendications 1 et 2, dans lequel un niveau de charge critique pour au moins un segment de réseau (GSᵢ, GSₖ) est déterminé et la charge pour l'au moins un segment de réseau (GSᵢ, GSₖ) est équilibrée pour être en dessous du niveau de charge critique.

4. Procédé selon l'une quelconque des revendications 1 à 3, dans lequel des sources de génération mobiles sont incluses.

5. Procédé selon l'une quelconque des revendications 2 à 4, dans lequel les profils de déplacement des sources de charges mobiles (MLᵢ, MLₖ) sont modifiés en annonçant des informations de guidage (TG) aux sources de charges mobiles (MLᵢ, MLₖ).

6. Procédé selon l'une quelconque des revendications 1 à 5, dans lequel pour l'équilibrage, de préférence pour la détermination le schéma de commande, des informations influençant un profil externe sont déterminées et utilisées.

7. Procédé selon l'une quelconque des revendications 1 à 6, dans lequel une plage et/ou capacité de déplacement sont attribuées aux sources de charges mobiles (MLᵢ, MLₖ).

8. Procédé selon l'une quelconque des revendications 1 à 7, dans lequel l'équilibrage est effectué de sorte que la différence entre la totalité de charges de sources de charges et la totalité de génération (Gi, Gk) de toutes les sources de génération soit minimisée.

9. Procédé selon l'une quelconque des revendications 1 à 8, dans lequel un équilibrage est effectué entre des segments de réseau (GSᵢ, GSₖ) sur un même niveau de réseau électrique de structure.

10. Procédé selon l'une quelconque des revendications 1 à 9, dans lequel un équilibrage est effectué entre des segments de réseau (GSᵢ, GSₖ) sur différents niveaux de réseau électrique de structure.

11. Procédé selon l'une quelconque des revendications 1 à 10, dans lequel une communication par une connexion sans fil avec les sources de charges mobiles, de préférence sur la base de SMS ou d'une messagerie instantanée, est comprise.

12. Système pour équilibrer une charge par rapport à une génération de puissance entre des segments de réseau électrique (GSᵢ, GSₖ) d'un réseau électrique, dans lequel les segments de réseau (GSᵢ, GSₖ) sont connectés les uns aux autres, dans lequel chacun des segments de réseau (GSᵢ, GSₖ) comprend des sources de génération avec des profils de génération (Gi, Gk) et avec des variations correspondantes (ΔGᵢ, ΔGₖ), des charges fixes (SLᵢ, SLₖ), et une commande de segment (SCᵢ, SCₖ) qui est connectée à une commande inter-segments (ICS), et dans lequel
au moins l'un des segments de réseau (GSᵢ, GSₖ) peut être connecté à une source de charge mobile (MLᵢ, MLₖ) représentée par un profil de charge mobile (Mᵢ, Mₖ) et se déplaçant selon un profil de déplacement, dans lequel :
a) chaque commande de segment de réseau électrique (SCᵢ, SCₖ) est configurée pour calculer des besoins d'ajustement (Sᵢ, Sₖ) et des variations correspondantes (ΔSᵢ, ΔSₖ) à un moment futur (t') et pour envoyer ses calculs à la commande inter-segments (ICS),
b) la commande inter-segments (ICS) est configurée pour calculer les besoins d'ajustement (Si, Sk) au moment futur (t') et les variations correspondantes (ΔSᵢ, ΔSₖ),
c) la commande inter-segments (ICS) est configurée pour utiliser des charges mobiles prévues (Mᵢ, Mₖ) au moment futur (t') ainsi que leurs variations correspondantes (Δ Mᵢ, ΔMₖ), et
d) la commande inter-segments (ICS) est configurée pour déterminer un schéma de commande à utiliser pour équilibrer les segments de réseau électrique (GSᵢ, GSₖ) sur la base de la différence entre les besoins d'ajustement (Sᵢ, Sₖ) au moment futur (t'), les variations correspondantes (ΔSᵢ, ΔSₖ), les charges mobiles prévues (Mᵢ, Mₖ) au moment futur (t') et les variations correspondantes (ΔMᵢ, ΔMₖ).
